# FASCICULE DE BREVET EUROPEEN

(11) **EP 1 253 057 B1**
(45) Date de publication et mention de la délivrance du brevet: **30.06.2004**
(21) Numéro de dépôt: 02291033.5
(22) Date de dépôt: 24.04.2002
(51) Int. Cl.: B60T 17/22, B60T 11/232

(54) **Dispositif de détection d'actionnement d'un système de freinage et application**
Vorrichtung zur Erkennung der Betätigung einer Bremsanlage und ihrer Anwendung
Device for detecting the activation of a braking system and its use

(30) Priorité: 26.04.2001 FR 0105778
(43) Date de publication de la demande: 30.10.2002
(73) Titulaire: ROBERT BOSCH GmbH, 70442 Stuttgart (DE)
(72) Inventeur: Fourcade, Jean, 77420 Champs sur Marne (FR); Masson, Olivier, 75019 Paris (FR); Michon, Jean-Pierre, 77178 Saint Pathus (FR)
(74) Mandataire: Hurwic, Aleksander Wiktor

(56) Documents cités:
- EP-A- 0 008 863
- DE-A- 2 212 465
- DE-A- 3 413 430
- DE-A- 19 622 545
- DE-A- 19 915 832
- US-A- 5 841 086

## Description

La présente invention a trait, de façon générale, au domaine du freinage des véhicules automobiles.

Plus précisément, l'invention concerne un dispositif de détection d'actionnement d'un système de freinage équipé d'un maître-cylindre hydraulique, le maître-cylindre comprenant lui-même au moins un équipage mobile disposé dans un alésage d'un corps cylindrique et incluant un piston hydraulique, et l'équipage mobile adoptant une position de repos en absence d'actionnement du système de freinage, et une position décalée lors de l'actionnement du système de freinage, ledit dispositif comprenant également un détecteur (5) externe à l'alésage (110) du corps cylindrique (11) et sensible à une variation de perméabilité d'un circuit magnétique provoquée par un mouvement effectué par une première pièce (3) de l'équipage mobile (10), lorsque cet équipage (10) passe de sa position de repos à sa position décalée ou inversement

Traditionnellement, la détection d'actionnement du système de freinage d'un véhicule, qui sert notamment à commander l'allumage et l'extinction des feux de ralentissement de ce véhicule, est réalisée au moyen d'un interrupteur disposé à proximité de la pédale de frein et déclenché par l'abaissement de cette pédale.

En pratique, non seulement une telle disposition oblige à monter l'interrupteur dans l'habitacle, c'est-à-dire dans des conditions d'accès difficiles, mais elle requiert en outre un contrôle dimensionnel rigoureux pour faire en sorte que l'actionnement des freins soit détecté de façon aussi précoce que possible.

En outre, la fiabilité et la précision obtenues par cet agencement sont difficiles à maîtriser.

Il est également connu du document DE 19915832 un dispositif d'actionnement d'un système de freinage équipé d'un maître cylindre comportant un capteur à effet Hall monté sur un corps du maître cylindre et un aimant porté par un piston du maître cylindre.

Il est également connu du document EP 0008863 A, un maître cylindre comportant un équipage mobile comprenant un clapet et une goupille montée basculante.

Dans ce contexte, la présente invention vise à proposer un dispositif de détection d'actionnement d'un système de freinage qui échappe aux contraintes et limitations précitées et aux inconvénients qu'elles entraînent.

A cette fin, le dispositif selon l'invention, par ailleurs conforme à la définition générique qui en est donnée dans le préambule ci-dessus, est essentiellement caractérisé en ce que ledit équipage mobile comprend un clapet et une goupille, le clapet incluant un obturateur traversant le piston hydraulique, et la goupille offrant sélectivement à l'obturateur un appui qui place cet obturateur dans une position d'ouverture du clapet ou dans une position de fermeture du clapet, selon que l'équipage mobile est dans sa position de repos ou dans sa position décalée, en ce que la goupille constitue la première pièce et adopte dans le corps cylindrique une disposition sensiblement transversale, en ce que la goupille est réalisée en un matériau ferromagnétique, et en ce que la goupille est montée basculante, au moins autour d'un point de rotation, entre une position de repos et une position décalée respectivement atteintes pour la position de repos et la position décalée de l'équipage mobile

Grâce à l'implantation du détecteur sur le maître-cylindre, le dispositif de détection de l'invention peut être installé dans des conditions d'accès très aisées.

De surcroît, comme le détecteur est ainsi fixé à l'organe de haute précision que constitue le maître-cylindre, le contrôle dimensionnel requis dans l'art antérieur devient superflu.

Si la goupille présente une première extrémité relativement proche du point de rotation et une seconde extrémité relativement éloignée du point de rotation, le détecteur est de préférence plus proche de la seconde extrémité de la goupille que de sa première extrémité.

Le dispositif de l'invention comprend avantageusement un ressort en appui sur un point de la goupille intermédiaire entre l'appui de l'obturateur et la seconde extrémité de la goupille, et qui sollicite la goupille vers l'obturateur.

L'équipage mobile peut adéquatement comprendre un clinquant rapporté sur la première extrémité de la goupille et présentant un coude qui prend appui au moins sur une face interne du piston pour constituer le point de rotation.

Pour augmenter la sensibilité de détection, dans le cas d'une détection magnétique, le dispositif de l'invention peut comprendre un insert à forte perméabilité magnétique noyé dans le corps du maître-cylindre, la seconde extrémité de la goupille étant alors de préférence plus proche de l'insert dans la position de repos de l'équipage mobile que dans la position décalée de l'équipage mobile.

Dans ce cas, le corps du maître-cylindre est aussi avantageusement constitué d'un matériau de faible susceptibilité magnétique, par exemple en aluminium.

Le dispositif de l'invention est notamment applicable à la commande de l'allumage et / ou de l'extinction de feux de ralentissement d'un véhicule automobile, d'autres applications pouvant néanmoins être envisagées, en particulier dans le secteur automobile, pour tirer parti de son fonctionnement précis.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe d'un dispositif conforme à l'invention, associé à un maître-cylindre représenté en coupe partielle et dans son état de repos; et
- la Figure 2 est une vue semblable à la figure 1, dont elle diffère seulement par le fait que le maître-cylindre est représenté dans un état d'actionnement.

Comme annoncé précédemment, l'invention concerne un dispositif de détection permettant de détecter l'actionnement d'un maître-cylindre hydraulique 1 équipant un système de freinage hydraulique.

De façon connue, le maître-cylindre 1 comprend lui-même un équipage mobile 10 qui est disposé dans l'alésage 110 du corps cylindrique 11 du maître-cylindre, et qui inclut un piston hydraulique 4.

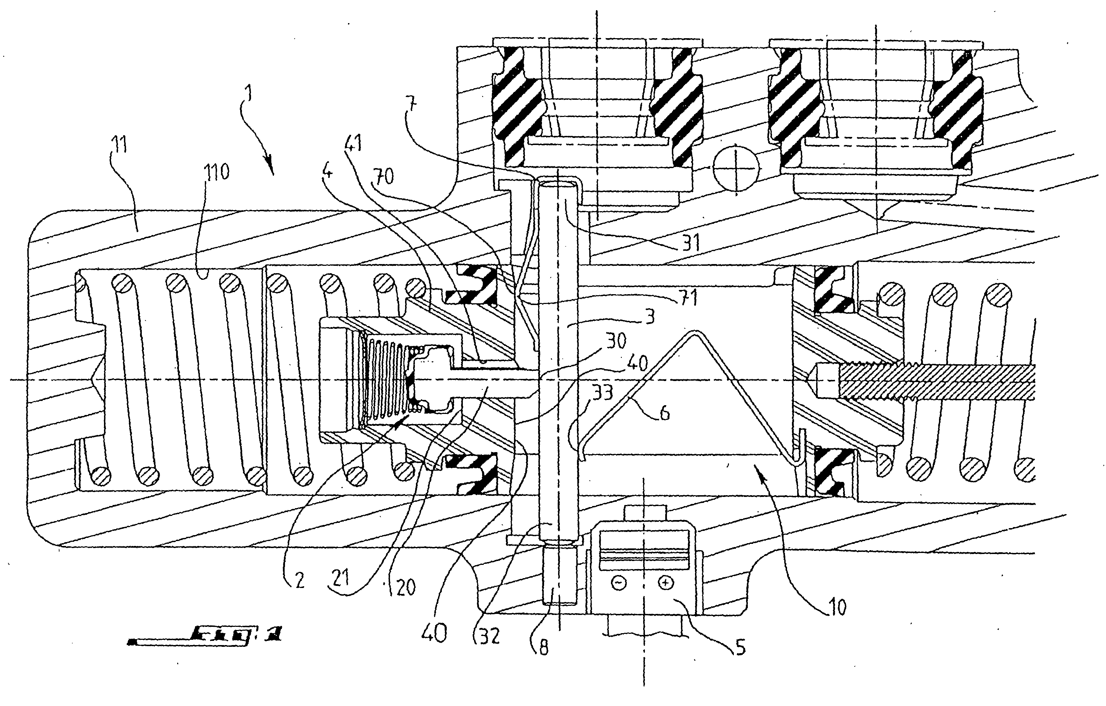

Lorsque le système de freinage, et notamment le maître-cylindre 1, se trouvent dans leur état de repos illustré à la figure 1, l'équipage mobile 10 adopte lui-même une position de repos.

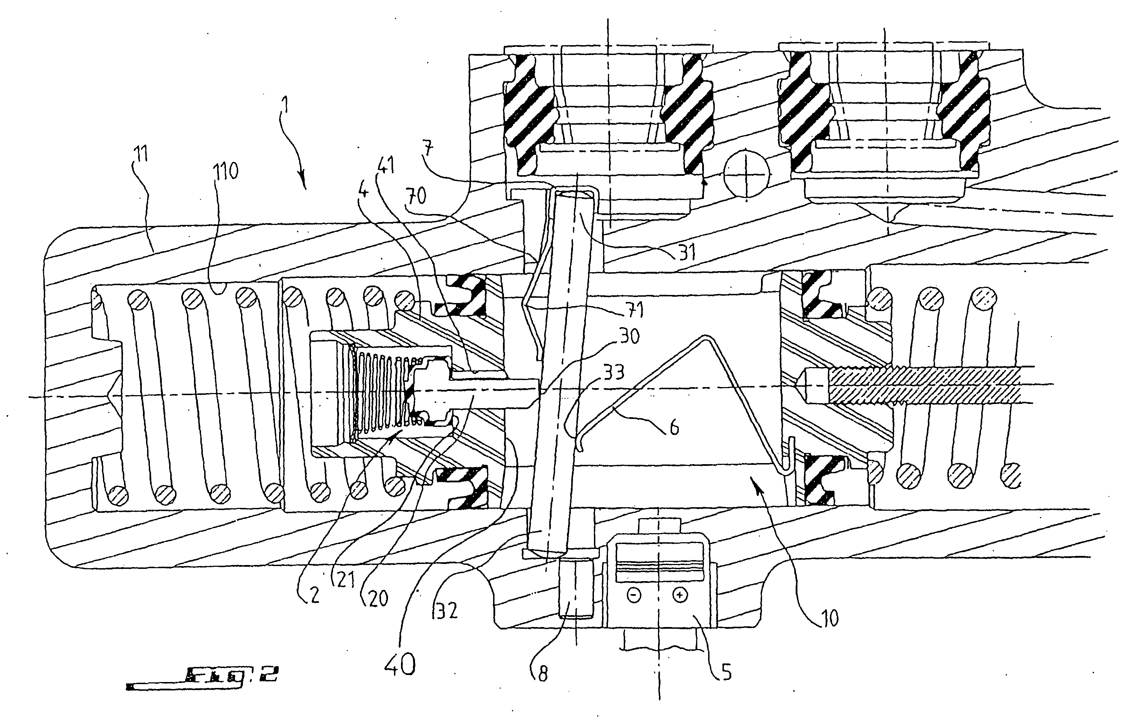

En revanche, dès que le système de freinage, et notamment le maître-cylindre 1, sont déplacés de leur état de repos et donc actionnés, comme le montre la figure 2, l'équipage mobile 10 adopte lui-même une position décalée, en l'occurrence vers la gauche sur la figure 2.

Le dispositif de l'invention comprend un détecteur 5, qui est disposé à l'extérieur de l'alésage 110 du corps cylindrique 11, et qui est sensible à un mouvement qu'effectue une pièce au moins de l'équipage mobile 10, lorsque cet équipage 10 passe de sa position de repos à sa position décalée ou inversement.

Dans le mode de réalisation illustré, le détecteur 5 comprend un capteur, tel qu'une cellule à effet Hall, sensible aux variations d'un champ magnétique qui est créé par un aimant intégré à ce détecteur et qui circule dans le circuit magnétique que forment ensemble le corps 1 du maître-cylindre et les composants de ce dernier.

Par ailleurs, la pièce de l'équipage dont le mouvement est détecté est constituée par une goupille 3, qui est réalisée en un matériau ferromagnétique, tel que l'acier.

La goupille 3 est montée basculante, autour d'un point de rotation 70, entre une position de repos (figure 1) et une position décalée (figure 2), qu'elle atteint respectivement pour la position de repos de l'équipage mobile 10, et pour sa position décalée.

Lorsque la goupille 3 passe de l'une de ses positions à l'autre, elle modifie la perméabilité du circuit magnétique que forment le corps 1 du maître-cylindre et les composants de ce dernier, et la variation du champ magnétique local qui en résulte pour le capteur intégré au détecteur 5 permet la détection par ce dernier du mouvement de la goupille 3.

Comme le montrent les figures, l'équipage mobile 10 comprend plus précisément un clapet 2 et la goupille 3, le clapet 2 incluant un obturateur 20 qui traverse le piston hydraulique 4.

La goupille 3 est disposée transversalement dans le corps cylindrique 11 de manière à commander l'ouverture et la fermeture du clapet 2.

Pour ce faire, lorsque l'équipage mobile 10 est dans sa position de repos (figure 1), l'obturateur 20 du clapet 2 est en appui sur la plage d'appui 30 de la goupille 3, se dégageant ainsi du siège de clapet 21 formé-autour du perçage 41 du piston 4.

Dans ces conditions, le clapet 4 est ouvert, et le volume délimité par l'alésage 110 du corps 11 peut être ré-alimenté en liquide de freinage.

Lorsque l'équipage mobile 10 est dans sa position décalée (figure 2), l'obturateur 20 du clapet 2 est en appui sur le siège de clapet 21, se dégageant de la plage d'appui 30 de la goupille 3.

Dans ces conditions, le clapet 4 est fermé, et le déplacement du piston 4 (vers la gauche sur les figures) conduit à une augmentation de la pression dans le volume délimité par l'alésage 110, et dans le circuit de freinage (non représenté) qui communique avec lui.

Le point de rotation 70 de la goupille, qui n'est pas nécessairement unique et qui peut donc varier au cours de la rotation de cette goupille, est avantageusement plus proche de l'une des extrémités de la goupille que de l'autre, par exemple plus proche de l'extrémité 31 qui apparaît comme son extrémité supérieure sur les figures, que de son extrémité inférieure 32.

En revanche, comme l'extrémité 32 de la goupille effectue un plus grand déplacement que l'extrémité 31 au cours de la rotation de cette goupille, la plus grande sensibilité du dispositif de l'invention est obtenue en plaçant le détecteur 5 à plus grande proximité de l'extrémité 32 de la goupille 3 que de son extrémité 31.

Pour assurer un basculement reproductible de la goupille, le dispositif de l'invention peut avantageusement comprendre un ressort 6, par exemple conformé en épingle, qui sollicite la goupille 3 vers l'obturateur 20 en prenant appui sur un point 33 de la goupille 3 disposé entre la zone d'appui 30 de l'obturateur 20, et l'extrémité inférieure 32 de cette goupille 3.

Le point de rotation 70 de la goupille peut être constitué par tout point du corps ou de l'équipage mobile, sur lequel vient s'appuyer un clinquant 7 rapporté sur l'extrémité supérieure 31 de la goupille 3, ce clinquant pouvant notamment présenter un coude 71 susceptible de prendre appui sur la face interne 40 du piston 4 (figure 1).

Puisque le détecteur 5 est sensible à une variation de perméabilité d'un circuit magnétique, le dispositif de l'invention comprend de préférence un insert 8 à forte perméabilité magnétique, qui est noyé dans le corps 11 du maître-cylindre 1 à proximité immédiate de l'une des positions qu'occupe l'extrémité la plus mobile de la goupille, c'est-à-dire l'extrémité inférieure 32 de celle-ci.

De plus, il peut être judicieux de faire en sorte que la goupille 3 soit plus proche de l'insert 8 dans la position de repos de l'équipage mobile 10 que dans la position décalée de l'équipage mobile, de manière à réduire les pertes magnétiques.

Enfin, le corps 11 du maître-cylindre 1 est dans ce cas de préférence constitué d'un matériau de faible susceptibilité magnétique, tel que l'aluminium par exemple.

Le dispositif de détection d'actionnement est notamment applicable à la commande de l'allumage et / ou de l'extinction de feux de ralentissement d'un véhicule automobile.

Néanmoins, ce dispositif peut aussi être utilisé pour adresser un signal de début de freinage à tout circuit électronique de contrôle de freinage ou de contrôle de comportement du véhicule, susceptible de requérir une telle information.

## Revendications

1. Dispositif de détection d'actionnement d'un système de freinage équipé d'un maître-cylindre hydraulique (1), le maître-cylindre (1) comprenant lui-même un équipage mobile (10) disposé dans un alésage (110) d'un corps cylindrique (11) et incluant un piston hydraulique (4), et l'équipage mobile (10) adoptant une position de repos en absence d'actionnement du système de freinage, et une position décalée lors de l'actionnement du système de freinage, ledit dispositif comprenant également un détecteur (5) externe à l'alésage (110) du corps cylindrique (11) et sensible à une variation de perméabilité d'un circuit magnétique provoquée par un mouvement effectué par une première pièce (3) de l'équipage mobile (10), lorsque cet équipage (10) passe de sa position de repos à sa position décalée ou inversement **caractérisé en ce que** ledit équipage mobile comprend un clapet (2) et une goupille (3), le clapet (2) incluant un obturateur (20) traversant le piston hydraulique (4), et la goupille (3) offrant sélectivement à l'obturateur (20) un appui (30) qui place cet obturateur (20) dans une position d'ouverture du clapet (2) ou dans une position de fermeture du clapet (2), selon que l'équipage mobile (10) est dans sa position de repos ou dans sa position décalée, **en ce que** la goupille (3) constitue la première pièce (3) et adopte dans le corps cylindrique (11) une disposition sensiblement transversale, **en ce que** la goupille (3) est réalisée en un matériau ferromagnétique, et **en ce que** la goupille (3) est montée basculante, au moins autour d'un point de rotation (70), entre une position de repos et une position décalée respectivement atteintes pour la position de repos et la position décalée de l'équipage mobile (10).

2. Dispositif de détection suivant la revendication 1, **caractérisé en ce que** la goupille (3) présente une première extrémité (31) relativement proche du point de rotation (70), une seconde extrémité (32) relativement éloignée du point de rotation (70), et **en ce que** le détecteur (5) est plus proche de la seconde extrémité (32) de la goupille (3) que de sa première extrémité (31).

3. Dispositif de détection suivant la revendication 2, **caractérisé en ce qu'**il comprend un ressort (6) en appui sur un point (33) de la goupille (3) intermédiaire entre l'appui (30) de l'obturateur (20) et la seconde extrémité (32) de la goupille (3), et qui sollicite la goupille (3) vers l'obturateur (20).

4. Dispositif de détection suivant l'une quelconque des revendications 2 et 3, **caractérisé en ce que** l'équipage mobile (10) comprend un clinquant (7) rapporté sur la première extrémité (31) de la goupille (3) et présentant un coude (71) qui prend appui au moins sur une face interne (40) du piston (4) pour constituer le point de rotation (70).

5. Dispositif de détection suivant l'une quelconque des revendications précédentes combinées aux revendications 1 et 2, **caractérisé en ce qu'**il comprend un insert (8) à forte perméabilité magnétique noyé dans le corps (11) du maître-cylindre (1), et **en ce que** la seconde extrémité (32) de la goupille (3) est plus proche de l'insert (8) dans la position de repos de l'équipage mobile (10) que dans la position décalée de l'équipage mobile.

6. Dispositif de détection suivant la revendication 5, **caractérisé en ce que** le corps (11) du maître-cylindre (1) est constitué d'un matériau de faible susceptibilité magnétique, tel que l'aluminium.

7. Application d'un dispositif de détection suivant la revendication 6 pour commander un allumage ou une extinction de feux de ralentissement d'un véhicule automobile.

## Patentansprüche

1. Vorrichtung zur Erkennung der Betätigung eines Bremssystems, das mit einem hydraulischen Hauptzylinder (1) ausgestattet ist, wobei der Hauptzylinder (1) selbst eine bewegliche Gruppe (10) umfasst, die in einer Bohrung (110) eines zylindrischen Körpers (11) angebracht ist und einen hydraulischen Kolben (4) enthält, und wobei die bewegliche Gruppe (10) eine Ruhelage einnimmt, wenn das Bremssystem nicht betätigt wird, und eine verschobene Lage, wenn das Bremssystem betätigt wird, wobei die Vorrichtung auch einen Detektor (5) aufweist, der sich außerhalb der Bohrung (110) des zylindrischen Körpers (11) befindet und der empfindlich ist gegen eine Veränderung der Permeabilität eines Magnetkreises, die durch eine von einem ersten Teil (3) der beweglichen Gruppe (10) durchgeführte Bewegung bewirkt wird, wenn diese Gruppe (10) von der Ruhelage in die verschobene Lage wechselt oder umgekehrt, **dadurch gekennzeichnet, dass** die bewegliche Gruppe ein Ventilelement (2) und einen Stift (3) aufweist, wobei das Ventilelement (2) einen Verschluss (20) enthält, der den hydraulischen Kolben (4) durchdringt, und der Stift (3) dem Verschluss (20) wahlweise eine Stütze (30) bietet, die diesen Verschluss (20) in eine Position mit geöffnetem Ventilelement (2) oder in eine Position mit geschlossenem Ventilelement (2) bringt, je nachdem, ob die bewegliche Gruppe (10) sich in der Ruhelage oder in der verschobenen Lage befindet, dass der Stift (3) das erste Teil (3) darstellt und im zylindrischen Körper (11) eine im wesentlichen transversale Anordnung einnimmt, dass der Stift (3) aus ferromagnetischem Material hergestellt ist und dass der Stift (3), zumindest um einen Rotationspunkt (70) herum, zwischen einer Ruhelage und einer verschobenen Lage kippbar montiert ist, die jeweils für die Ruhelage und für die verschobene Lage der beweglichen Gruppe (10) eingenommen werden.

2. Erkennungsvorrichtung nach Anspruch 1, **dadurch gekennzeichnet, dass** der Stift (3) ein erstes Ende (31) aufweist, das relativ nahe am Rotationspunkt (70) ist, ein zweites Ende (32), das vom Rotationspunkt (70) relativ entfernt ist, und dass der Detektor (5) sich näher am zweiten Ende (32) des Stiftes (3) befindet als an seinem ersten Ende (31).

3. Erkennungsvorrichtung nach Anspruch 2, **dadurch gekennzeichnet, dass** sie eine Feder (6) aufweist, die sich an einem Punkt (33) des Stiftes (3), der zwischen der Stütze (30) des Verschlusses (20) und dem zweiten Ende (32) des Stiftes (3) liegt, abstützt und die den Stift (3) hin zum Verschluss (20) belastet.

4. Erkennungsvorrichtung nach einem der Ansprüche 2 und 3, **dadurch gekennzeichnet, dass** die bewegliche Gruppe (10) ein Beilagteil (7) aufweist, das am ersten Ende (31) des Stiftes (3) befestigt ist und eine Biegung (71) aufweist, die sich mindestens an einer Innenfläche des Kolbens (4) abstützt, um den Rotationspunkt (70) zu bilden.

5. Erkennungsvorrichtung nach einem der zuvor genannten Ansprüche, kombiniert mit den Ansprüchen 1 und 2, **dadurch gekennzeichnet, dass** sie einen Einsatz (8) mit hoher magnetischer Permeabilität aufweist, der im Körper (11) des Hauptzylinders (1) eingebettet ist, und dass das zweite Ende (32) des Stiftes (3) in der Ruhelage der beweglichen Gruppe (10) näher am Einsatz (8) liegt als in der verschobenen Lage der beweglichen Gruppe.

6. Erkennungsvorrichtung nach Anspruch 5, **dadurch gekennzeichnet, dass** der Körper (11) des Hauptzylinders (1) aus einem Material mit geringer magnetischer Suszeptibilität, wie Aluminium, besteht.

7. Verwendung einer Erkennungsvorrichtung nach Anspruch 6, um das Einschalten oder Ausschalten der Bremsbeleuchtung eines Kraftfahrzeuges zu steuern.

## Claims

1. Device for detecting actuation of a braking system equipped with a hydraulic master cylinder (1), the master cylinder (1) itself comprising a moving gear (10) arranged in a bore (110) of a cylindrical body (11) and including a hydraulic piston (4), and the moving gear (10) adopting a position of rest when the braking system is not actuated and an offset position when the braking system is actuated, the said device also comprising a detector (5) external to the bore (110) of the cylindrical body (11) and sensitive to a movement performed by a first part (3) the moving gear (10), when this gear (10) moves from its position of rest to its offset position or vice versa, **characterized in that** the said moving gear comprises a valve (2) and a pin (3), the valve (2) including a shutter (20) passing through the hydraulic piston (4) and the pin (3) selectively offering the shutter (20) a resting place (30) which places this shutter (20) in a position in which the valve (2) is open or in a position in which the valve (2) is closed depending on whether the moving gear (10) is in its position of rest or in its offset position, and **in that** the pin (3) constitutes the first part (3) and adopts within the cylindrical body (11) a roughly transverse arrangement, **in that** the pin (3) is made of a ferromagnetic material and **in that** the pin (3) is mounted to rock, at least about a point of rotation (70), between a position of rest and an offset position, which positions are reached when the moving gear (10) is in its position of rest and when the moving gear is in its offset position, respectively.

2. Detection device according to Claim 1 or 2, **characterized in that** the pin (3) has a first end (31) relatively close to the point of rotation (70), a second end (32) relatively distant from the point of rotation (70), and **in that** the detector (5) is closer to the second end (32) of the pin (3) than to its first end (31).

3. Detection device according to Claim 2, **characterized in that** it comprises a spring (6) resting against a point (33) of the pin (3) intermediate between the resting place (30) of the shutter (20) and the second end (32) of the pin (3) and which urges the pin (3) towards the shutter (20).

4. Detection device according to either one of Claims 2 and 3, **characterized in that** the moving gear (10) comprises a metal leaf (7) attached to the first end (31) of the pin (3) and exhibiting an elbow (71) which rests at least against an internal face (40) of the piston (4) to constitute the point of rotation (70).

5. Detection device according to any one of the preceding claims combined with Claims 1 and 2, **characterized in that** it comprises an insert (8) with high magnetic permeability embedded in the body (11) of the master cylinder (1), and **in that** the second end (32) of the pin (3) is closer to the insert (8) when the moving gear (10) is in the position of rest than when the moving gear is in the offset position.

6. Detection device according to any one of the preceding claims, **characterized in that** the body (11) of the master cylinder (1) is made of a material with low magnetic susceptibility, such as aluminium.

7. Application of a detection device according to claim (6) to the switching on or off of motor vehicle brake lights.
